Europäisches Patentamt

European Patent Office

Office européen des brevets

(19)

(11) Veröffentlichungsnummer: **0 231 827 B1**

# (12) EUROPÄISCHE PATENTSCHRIFT

(45) Veröffentlichungstag der Patentschrift: **02.01.92**

(51) Int. Cl.5: **B24B 41/00**

(21) Anmeldenummer: **87100894.2**

(22) Anmeldetag: **23.01.87**

(54) **Vorrichtung zum Beschicken einer Gussputzschleifmaschine.**

(30) Priorität: **06.02.86 DE 3603653**

(43) Veröffentlichungstag der Anmeldung:
**12.08.87 Patentblatt 87/33**

(45) Bekanntmachung des Hinweises auf die
Patenterteilung:
**02.01.92 Patentblatt 92/01**

(84) Benannte Vertragsstaaten:
**AT CH FR GB IT LI NL SE**

(56) Entgegenhaltungen:
**DE-U- 8 416 193**
**GB-A- 2 028 194**
**US-A- 4 052 175**

**SOCIET INVENTIONS ILLUSTRATED Sektion
Mechanik, Woche D40, P56, 11 November
1981, Zusammenfassung Nr. K3553, Derwent
Publication Ltd, London, GB, & SU -A -
795858 (MINSK CAR IND INST) 15.01.1981**

(73) Patentinhaber: **M.A.N.-ROLAND Druckmaschinen Aktiengesellschaft
Christian-Pless-Strasse 6-30
W-6050 Offenbach/Main(DE)**

(72) Erfinder: **Feldt, Wolfgang
Hühnerberg 28
W-6466 Gründau 2(DE)**

(74) Vertreter: **Marek, Joachim, Dipl.-Ing.
c/o MAN Roland Druckmaschinen AG Patentabteilung W. III Christian-Pless-Strasse 6-30
Postfach 10 12 64
W-6050 Offenbach/Main(DE)**

## Beschreibung

Der Erfindung liegt eine Gußputzmaschine nach dem Oberbegriff des Patentanspruchs 1 zugrunde.

Eine solche Gußputzschleifmaschine ist in der DE-OS 3 305 423 beschrieben.

Zur Vereinfachung und Humanisierung der Arbeit in Gießereien sollen kleinere rohe Gußstücke mit Hilfe einer weitgehend automatisch arbeitenden Gußputzschleifmaschine von ihrem Gußgrat befreit werden. Die Beschickung dieser Maschine mußte bislang von einer Bedienungsperson per Hand vorgenommen werden. Dazu mußte diese Bedienungsperson einerseits nahe an dem Lärm und Schmutz abgebenden Arbeitsraum der Gußputzschleifmaschine stehen und war andererseits auch von dem relativ schnellen Maschinentakt, vor allem bei kleineren Teilen, abhängig. Das Ziel einer weiteren Entwicklung war eine zusätzliche Entlastung der Bedienungsperson dadurch, daß auch die Zufuhr von Werkstücken automatisiert werden sollte.

In der US-A-4 052 175 wird eine automatische Putz-Schleifmaschine beschrieben. Dieser Putz-Schleifmaschine werden rotationssymmetrische Werkstücke über eine Rollbahn zugeführt. Mit Hilfe von mehreren Manipulationseinrichtungen werden die Werkstücke danach für einen Manipulator bereitgestellt, der sie über nimmt, spannt und die Vorschubbewegung gegenüber dem Schleifwerkzeug ausführt. Nach der Bearbeitung werden die Werkstücke vom Manipulator auf einer Rutsche abgelegt. Der Vorgang wiederholt sich entsprechend. Der Manipulator ist zur Erzeugung der Transportbewegung schwenkbar.

Die Zufuhr von Werkstücken wird heute auch an vielen anderen Werkzeugmaschinen bereits automatisiert. Beispielhaft ist dazu das DE-GM 8 416 193 zu nennen. Es beschreibt eine Vorrichtung zur Übertragung von Paletten mit aufgespannten Werkstücken zwischen einem Palettenbahnhof und dem Werkstücktisch einer Werkzeugmaschine. In dieser Vorrichtung ist ein Palettenbahnhof mit in einer geschlossenen Bahn verlaufenden Längsführungen vorgesehen. Auf diesen Längsführungen läuft eine feste Anzahl von Paletten um. Die Paletten werden von einem Palettenträger, der in den geschlossenen Zug der Längsführungen eingebaut ist aus dem Umlauf heraus und zum Werkstücktisch der Werkzeugmaschine verschoben. Nachdem die auf der Palette festgespannten Werkstücke dort bearbeitet sind, werden sie von dem Palettenträger auch wieder in den geschlossenen Zug der Längsführungen zurückgeholt und weitergesetzt. Auf diese Weise können die in dem Palettenbahnhof vorhandenen Werkstücke nach und nach abgearbeitet werden.

Nachteilig an dieser Vorrichtung ist besonders der hohe Aufwand, um den Genauigkeitsanforderungen der Werkzeugmaschine gerecht zu werden und die damit einhergehende komplizierte Konstruktion. Weiterhin ist nachteilig, daß die Werkstücke zusammen mit ihrer Palette von einer speziell dazu vorgesehenen Vorrichtung aus dem geschlossenen Zug der Längsführungen herausgenommen und auch wieder dorthin zurückgesetzt werden. Dazu sind z.B. Mechanismen zur Kopplung und Entkopplung, zur Längsverschiebung und zur Drehung in der Ebene der Längsführung notwendig. Zudem müssen die Werkstücke auf der Palette fest gespannt werden.

In der Gußputzschleifmaschine ist eine solche auf hohe Genauigkeit abgestimmte Einrichtung nicht angebracht. Eine zu hohe Genuaigkeit in der Führung der Werkstücke erweist sich dort eher als Nachteil, da sehr rauher Betrieb unter starker Schmutzbelastung zu erwarten ist. Außerdem ist die Umrüstung der Werkstückträger aufwendig, was bei einer Bearbeitung von kleinen Teilen in kurzen Taktzeiten sehr schwierig ist. Die Aufnahme von Werkstücken in einer festen Aufspannung auf der Palette ist demnach nicht zu befürworten.

Aufgabe der Erfindung ist es daher, einen Werkstückspeicher einer Gußputzschleifmaschine entsprechend dem Oberbegriff des Anspruchs 1 zu schaffen, in dem die Werkstücke lageorientiert, aber ohne Spannvorgang in Aufnahmevorrichtungen eingelegt werden können, die während der Bearbeitung auf einfachste WEise für neue Werkstücke umrüstbar sind, in dem die Zahl der Werkstücke im Speicher je nach Größe frei veränderbar ist und der bei sehr einfachem Aufbau auch sowohl erweitert als mit anderen Maschinen verkettet werden kann.

Die Lösung der Aufgabe wird erfindungsgemäß nach dem Kennzeichen des Anspruchs 1 vorgenommen.

Der Werkstückspeicher stellt den geschlossenen Zug einer Fahrbahn dar, die den Arbeitsraum der Gußputzschleifmaschine vom Arbeitsraum der Bedienungsperson trennt. Vorteilhaft ist, daß die Fahrbahn nicht durch den Arbeitsraum der Schleifmaschine hindurch geführt werden muß, da der Manipulator der Gußputzschleifmaschine als Transporteinrichtung für die Überbrückung der dort notwendigen Unterbrechung dient. Weiterhin ist sehr vorteilhaft, daß die feste Aufnahme der Werkstücke auf den Paletten erst vor dem Bearbeitungsvorgang durch das Spannen für die Bearbeitung erzielt wird. Daher müssen die Werkstücke nicht gesondert gehaltert werden. Dadurch ergibt sich ein insgesamt sehr einfacher Aufbau für die gesamte Einrichtung und durch die Spannung von Werkstück und Palette in einem Vorgang fällt die zusätzliche Spannung der Werkstücke auf der Palette als Arbeitsgang weg.

Weitere Vorteile sind durch die in den Unteransprüchen beschriebenen,weiter ausgestalteten Merkmale zu erzielen. Dazu sind die Zentrierung, die für die Bearbeitung günstige Einspannung der Werkstücke durch den besonderen Aufbau der Paletten und die besonders gestaltete Krafteinleitung als günstig gelöst zu nennen. Weiterhin sind Transport und Ausrichtung der einzelnen Paletten durch die vorgeschlagene Lösung einer Rollenkette, die über Reibschluß mit Hilfe von Mitnehmern die Paletten antreibt, sehr einfach, robust und bedienungsfreundlich gestaltet.

Eine Verkettung mit anderen Anlagen ist ohne weiteres möglich. Das Be- und Entladen ist sehr bedienungsfreundlich, wie auch die Umrüstung der Einrichtung sehr einfach und schnell für wechselnde Werkstücke vorgenommen werden kann. Schließlich ist die Raumausnutzung durch die freie Verschiebbarkeit der Paletten innerhalb des Werkstückspeichers sehr gut, auch bei wechselnden Werkstückgrößen gelöst.

Eine Ausgestaltung der Erfindung wird im Folgenden näher beschrieben. Dargestellt sind im Einzelnen in

Fig. 1 eine Übersicht über die gesamte Gußputzschleifmaschine,

Fig. 2 eine Draufsicht auf die Anordnung des Werkstückspeichers am Manipulator,

Fig. 3 eine Seitenansicht mit Teilschnitt entsprechend Linie x-x in Fig. 4 einer Palette,

Fig. 4 eine Draufsicht auf die Palette, und

Fig. 5 eine Palette mit Werkstück in die Handhabungseinrichtung eingespannt.

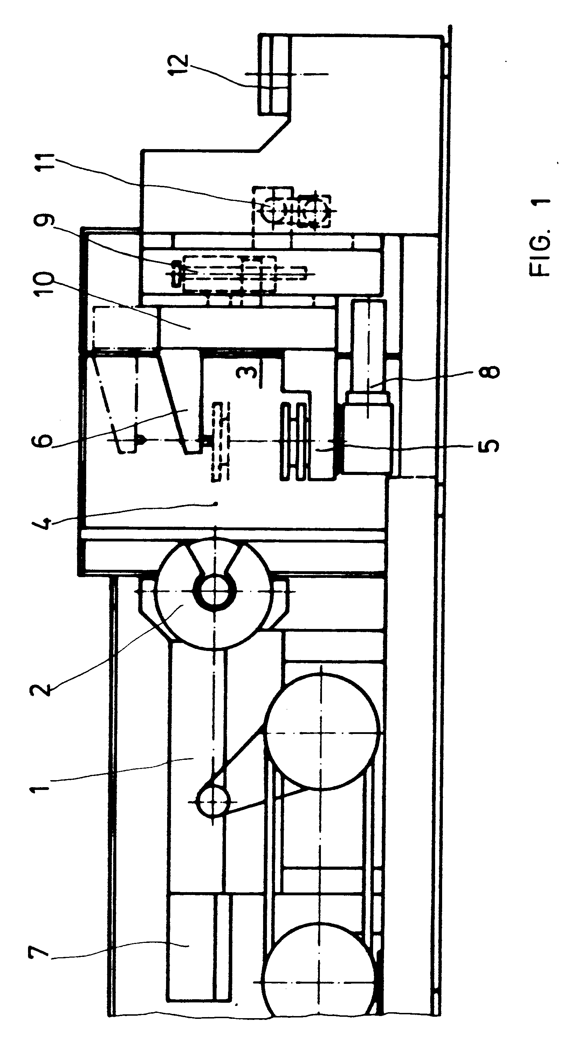

In Fig. 1 ist eine Gesamtansicht einer erfindungsgemäßen Einrichtung dargestellt. Die Gußputzschleifmaschine besteht aus einem Schleifaggregat 1 mit einer oder zwei senkrecht stehenden Schleifscheiben 2 und dem Manipulator 3. Zwischen beiden ist der Arbeitsraum 4 vorgesehen. Der Manipulator 3 ist mit einem Drehtisch 5 und einem Spannarm 6 versehen. Das Schleifaggregat 1 ist mit Hilfe eines Stellantriebes 7 verfahrbar. Der Manipulator 3 ist mit einem Drehantrieb 8 am Drehtisch 5, sowie einer linear wirkenden Höhenverstellung 9 und einem ebenfalls linear wirkenden Fahrantrieb 10 an seinem Ständer 11 versehen. Damit ist es möglich zwischen Spannarm 6 und Drehtisch 5 eingespannte Werkstücke in der Höhe und über die Maschinenbreite zu bewegen und dabei gleichzeitig zu drehen. In der Kombination aller Antriebe 7, 8, 9, 10 können so alle Oberflächenpunkte am horizontalen Umfang eines Werkstückes mit der Schleifscheibe 2 abgefahren werden. Dem Manipulator 3 ist ein Werkstückspeicher 12 zugeordnet. Er führt um den Ständer 11 herum.

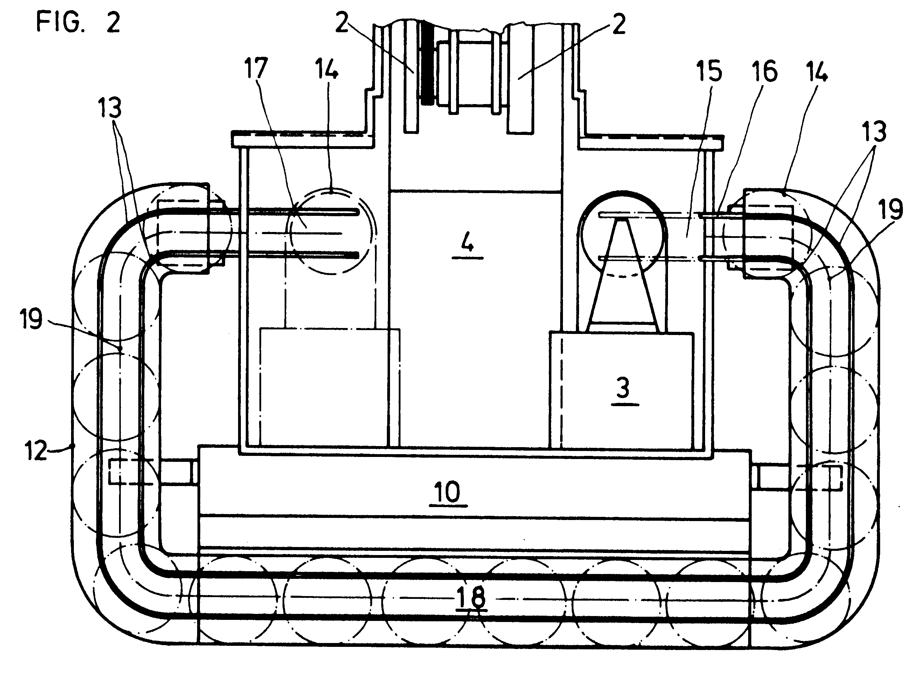

In Fig. 2 ist die Anordnung des Werkstückspeichers 12 insgesamt dargestellt. Er besteht aus einer Fahrbahn aus zwei parallel laufenden Führungsschienen 13, zwischen denen Paletten 14 geführt werden. Sie laufen von einem Palettenantrieb getrieben auf der Fahrbahn um. Auf der einen Seite des Manipulators 3 ist an der Fahrbahn eine Übernahmestation 15 vorgesehen. Die Paletten 14 werden hier einzeln auf ein an die Führungsschienen 13 anschließendes Schienenelement 16 geschoben. Das Schienenelement 16 ist in Längsrichtung verschiebbar. Es kann etwa mit Hilfe eines Pneumatikzylinders zwischen einer Ladeposition im Anschluß an die Fahrbahn und einer Übernahmeposition im Arbeitsraum 4 bewegt werden. Zur Übernahme einer Palette 14 durch den Manipulator 3 wird das Schienenelement 16 mit geladener Palette 14 aus der Ladeposition in die Übernahmeposition gefahren, wobei zur Lagesicherung auf dem Schienenelement 16 Rastelemente für die Palette 14 vorzusehen sind. Die Palette 14 muß für den Manipulator 3 in richtiger Orientierung und hinreichend genau positioniert bereitgestellt werden.

Der Manipulator 3 spannt das Werkstück samt der Palette 14 zwischen Drehtisch 5 und Spannarm 6 fest. Über den Fahrantrieb 10 wird die Werkstück-Paletten-Einheit von dem verschiebbaren Schienenelement 16 gezogen und in den Arbeitsraum 4 gebracht, wo das Werkstück mit den Schleifscheiben 2 zu bearbeiten ist. Nach beendeter Bearbeitung wird die Palette 14 an der Abgabestation 17 wieder auf die Führungsschienen 13 in richtiger Orientierung aufgeschoben. Die Paletten 14 werden im Beladebereich 18 mit Werkstücken bestückt und auch entladen.

Ein Arbeitstakt besteht aus den Schritten:

1. Palettenübernahme (transportieren, verschieben, spannen.

2. Werkstückbearbeitung.

3. Palettenabgabe (einschieben, ausspannen, abtransportieren).

Synchron mit der Bewegung der Paletten 14 an Übernahme- 15 und Abgabestation 16 werden alle anderen Paletten 14 bewegt. Sie müssen dabei den jeweiligen taktabhängigen Abstand untereinander beibehalten.

Dazu ist ein spezieller Palettenantrieb vorgesehen. Er besteht aus einem oder mehreren Kettentrieben, die unter der Fahrbahnmitte umlaufen. Diese sind so angeordnet, daß jeweils das obere Kettentrum die Unterseite der Paletten 14 berührt. die Bewegung wird durch Reibung übertragen. Um den Reibungskoeffizienten zu erhöhen ist vorgesehen, die Ketten mit Treibelementen auszustatten. Die Treibelemente können mit einer rauhen oder beschichteten Oberfläche versehen sein. Sinnvoll ist eine Beschichtung mit Gummi oder Kunststoff. Da zum Transport der Paletten 14 keine großen Kräfte übertragen werden müssen, ist eine aufwendige Führung für die Kettentriebe unnötig. Es muß lediglich starker Durchhang des oberen Kettentrums im Transportbereich vermieden werden, da sonst der Reibkontakt partiell verloren gehen kann.

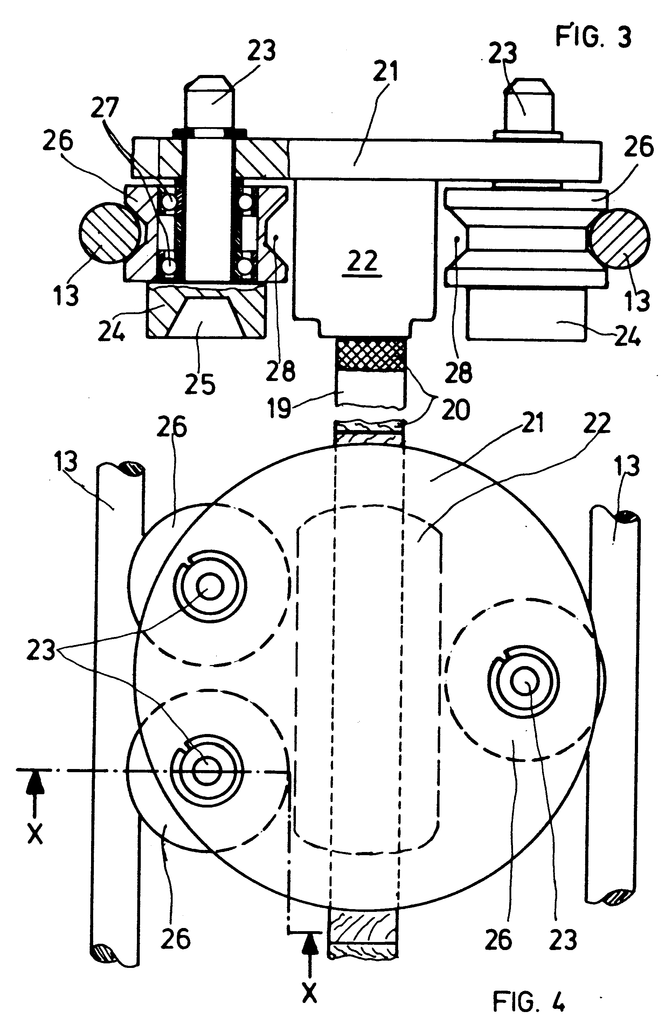

In Fig. 3 ist eine Palette 14 im Teilschnitt dargestellt. Dort ist auch der Wirkbereich des Palettenantriebs erkennbar. Eine schematisiert dargestellte Rollenkette 19 ist mit als Mitnahmelementen fungierenden Reibbelägen 20 versehen. Diese greifen an der Unterseite des Palettengrundkörpers 21 an einem Antriebsfortsatz 22 an. Die Palette 14 selbst ist mit drei Spannbolzen 23 versehen. Diese sind in den Palettengrundkörper 21 eingesetzt. Ihre Oberseite ist konisch zulaufend bearbeitet. An der Unterseite ist jeweils ein Spannansatz 24 vorgesehen, in den an der Stirnseite eine konische Bohrung 25 eingebracht ist. Zwischen Spannansatz 24 und Palettengrundkörper 21 ist jeweils eine Nutrolle 26 auf zwei Kugellagern 27 gehaltert. Die Nutrolle 26 weist an ihrem Umfang eine trapezförmige Nut 28 auf, die an den Durchmesser der Führungsschienen 13 angepaßt ist. Ein Spannbolzen 23 wird mit Kugellagern 27, Nutrolle 26 und für die Lagerung notwendigen Distanzringen durch einen Sicherungsring am Palettengrundkörper 21 befestigt.

In Fig. 4 ist die Verteilung der Spannbolzen 23 bzw. der Nutrollen 26 am Umfang des Palettengrundkörpers 21 dargestellt. Die Palette 14 ist asymmetrisch gelagert, indem zwei Nutrollen 26 auf der Innenseite der Fahrbahn nur einer auf der Außenseite gegenüberstehen. Dies ist aus Gründen der Einfachheit und wegen der Kurvengängigkeit so sinnvoll. Der Antriebsfortsatz 22 ist hier länglich dargestellt, was die Kraftübertragung in Kurven der Fahrbahn erleichtert.

Aus der Anordnung der Nutrollen 28 wird auch deutlich, daß die beiden zusammen auf einer Seite der Palette 14 liegenden Spannbolzen 23 näher am Umfang des Palettengrundkörpers liegen. Die Anordnung ist so gewählt, damit das Gewicht symmetrisch auf beide Führungsschienen 13 verteilt wird. Dadurch laufen die Paletten 14 immer leicht und ohne Verkanten auf den Führungsschienen 13. Auch weiter als für die Bearbeitung unbedingt nötig über die Paletten 14 überstehende Werkstücke werden ohne Probleme transportiert. Dies gilt auch für die Kurvenfahr. Da die einzeln laufende Nutrolle 26 auf der Außenseite der Fahrbahn liegt, wird die Palette 14 immer sicher geführt. Zum Kettentrieb ist noch anzumerken, daß auch die einteilige Version denkbar ist, wenn die vorgesehene Rollenkette 19 in ihrer Bewegungsebene horizontal angeordnet wird. Dann kann die Kettenführung jeder Kurvenform angepaßt werden. Die Reibbeläge 20 müssen allerdings seitlich an der Rollenkette 19 montiert werden. Hier wäre auch eine durchgehende Kettenführung von Nutzen.

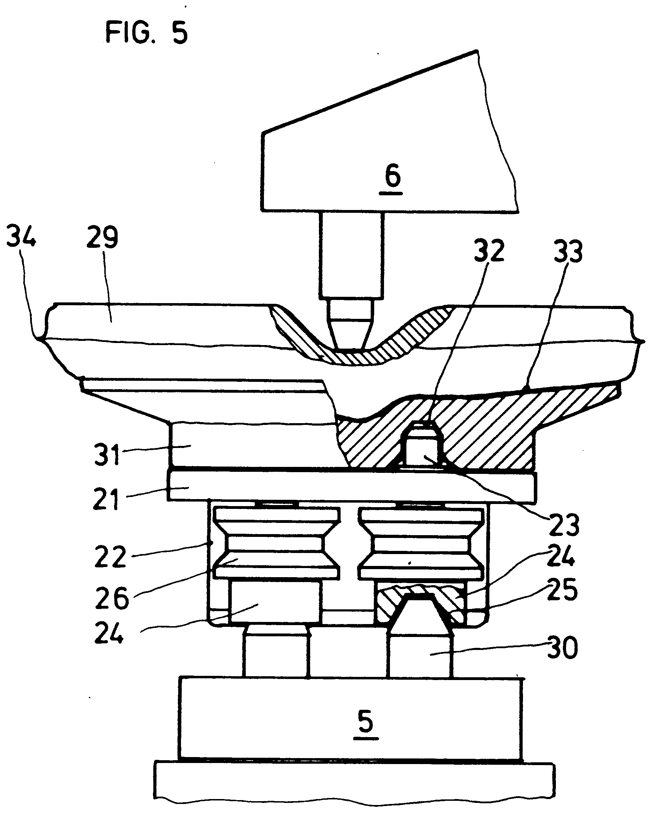

Eine wesentliche Funktion der gesamten Vorrichtung ist die komplette Einspannung von Palette 14 und Werkstück zur Bearbeitung in der Gußputzschleifmaschine. In Fig. 5 ist die Einspannung eines Gußstückes 29 zusammen mit einer Palette 14 dargestellt. In dem Drehtisch 5 sind in einer den Spannbolzen 23 entsprechenden Anordnung, die konisch bearbeitete und den Bohrungen 25 in den Spannbolzen 23 angepaßte Haltebolzen 30 eingesetzt. Auf dem Haltebolzen 30 sitzt die Palette 14 mit den Spannansätzen 24 auf. Die Nutrollen 26 liegen dabei frei. Auf der Palette 14 sitzt eine Werkstückaufnahme 31 auf. Sie ist an der Unterseite mit drei Führungsbohrungen 32 versehen. Diese Führungsbohrungen 32 korrespondieren mit den Spannbolzen 23, so daß die Werkstückaufnahme 31 fest auf diesen aufsitzt. Die konische Ausführung der Spannbolzen 23, Haltebolzen 30, Führungsbohrungen 32 und Bohrungen 25 sorgt für eine Zentrierung und genaue Ausrichtung des Gußstückes 29.

Die Werkstückaufnahme 31 ist an ihrer Oberseite als Schale 33 ausgebildet. Die Form der Schale 33 entspricht der Form des einzulegenden Gußstückes 29 an seiner Unterseite. Sie kann entsprechend als Negativabguß hergestellt werden. In der Schale 33 liegt das Gußstück 29 mit seinem Gußgrat 34. Für eine komplette Bearbeitung muß das Gußstück selbstverständlich über den Rand von Palette 14 und Werkstückaufnahme 31 hinausragen. Zum Spannen des Gußstückes 29 wird der Spannarm 6 gegen das Gußstück 29 gefahren, das dann zwischen Drehtisch 5 und Spannarm 6 gehalten wird. Die Spannkraft wird dabei direkt über die Spannbolzen 23 geleitet, so daß die Lagerung der Nutrollen 26 nicht beansprucht werden muß. Die Schale 33 in der Werkstückaufnahme 31 ist im Bezug auf das Werkstück so zu wählen, daß der Gußgrat 34 horizontal bzw. weitgehend parallel zum Drehtisch 5 liegt. Außerdem soll eine einfache Orientierung zum Einlegen des Gußstückes 29 möglich sein. Schließlich muß auch der Spannarm 6 einen sicheren und für die Krafteinleitung günstigen Angriffspunkt auf der Oberseite des Gußstückes 29 finden. Bei der Bearbeitung wird das Gußstück 29 um die Achse des Drehtisches 5 gedreht. Bei nicht in einer Ebene liegendem Gußgrat 34 wird es zusätzlich noch am Manipulator 3 auf- und abwärts bewegt. Gleichzeitig fährt das Schleifaggregat 1 die Kontur des Gußstückes 29 entlang dem Gußgrat 34 ab und entfernt diesen dabei.

Der Betrieb der Gußputzschleifmaschine im Zusammenhang mit der Vorrichtung zum Beschicken gestaltet sich insgesamt recht einfach. Ein Gußstück 29 wird im Beladebereich 18 in die WErkstückaufnahme 31 eingelegt. Wenn das gerade bearbeitete Werkstück vom Manipulator 3 auf die Führungsschienen 13 wieder aufgesetzt und ein Neues übernommen wird, verschiebt der Palettenantrieb die Paletten 14 im Werkstückspeicher 12 bis eine neue Palette 14 in der Übernahmestation 15 bereitsteht. Der Abstand der Paletten 14 untereinander muß nicht gleichmäßig sein. Es genügt Kollisionen zwischen den Paletten 15 z.B. bei Kurvenfahrt zu vermeiden. Ansonsten richtet sich der Palettentransport am Ankommen der ersten Palette 14 in der Übernahmestation aus.

Wenn neue Werkstücke bearbeitet werden sollen, muß der notwendige Abstand ermittelt und die maximale Zahl von Paletten 14, die im Werkstückspeicher 12 verbleiben können, errechnet werden. Die Abstandsänderung bzw. Entnahme oder Einsatz weiterer Paletten 14 kann leicht durch Verschieben gegenüber dem Palettenantrieb erledigt werden. Zur Entnahme bzw. zusätzlichen Bestückung von Paletten steht die Abgabestation 17 zur Verfügung. Zum Wechsel der Werkstücke läßt man lediglich eine leere Palette in die Maschine laufen, die dort den Programmablauf unterbricht. Bis dahin können schon die ersten Paletten 14 mit neuen Werkstückaufnahmen 31 für die neuen Gußstücke 29 versehen werden. Die Umrüstung ist extrem einfach, da die neue Werkstückaufnahme 31 nur aufgesteckt werden muß. Als Stillstandzeiten fallen dann nur noch der Programmwechsel in der Maschinensteuerung und evtl. ein Schleifscheibenwechsel an.

Die beschriebene Version der Vorrichtung zur Beschickung einer Gußputzschleifmschine ist noch ausbaufähig. So kann eine ähnliche Vorrichtung, wie sie zum Verschieben des nächsten zu bearbeitenden Werkstückes in der Übernahmestation dient, auch in der Abgabestation vorgesehen werden.

Ebenso sind im Rahmen der Erfindung weitere Ausbildungsmöglichkeiten für den Palettenantrieb und die Konstruktion der Paletten möglich.

Bezugszeichenliste

| | |
|---|---|
| 1 | Schleifaggregat |
| 2 | Schleifscheibe |
| 3 | Manipulator |
| 4 | Arbeitsraum |
| 5 | Drehtisch |
| 6 | Spannarm |
| 7 | Stellantrieb |
| 8 | Drehantrieb |
| 9 | Höhenverstellung |
| 10 | Fahrantrieb |
| 11 | Ständer |
| 12 | Werkstückspeicher |
| 13 | Führungsschienen |
| 14 | Palette |
| 15 | Übernahmestation |
| 16 | Schienenelement |
| 17 | Abgabestation |
| 18 | Beladebereich |
| 19 | Rollenkette |
| 20 | Reibbelag |
| 21 | Palettengrundkörper |
| 22 | Antriebsfortsatz |
| 23 | Spannbolzen |
| 24 | Spannansatz |
| 25 | Bohrung |
| 26 | Nutrolle |
| 27 | Kugellager |
| 28 | Nut |
| 29 | Gußstück |
| 30 | Haltebolzen |
| 31 | Werkstückaufnahme |
| 32 | Führungsbohrung |
| 33 | Schale |
| 34 | Gußgrat |

**Patentansprüche**

1. Gußputzschleifmaschine mit einem Werkstückspeicher und mit einem Manipulator zum Spannen von Werkstücken, zum Bewegen der Werkstücke in einem Arbeitsraum und zum Drehen der Werkstücke um eine Achse, wobei der Manipulator eine Unterbrechung des Werkstückspeichers im Bereich des Arbeitsraumes überbrückt, **dadurch gekennzeichnet,** daß der Werkstückspeicher (12) Führungsschienen (13) aufweist, auf deren Paletten (14) verfahrbar sind, daß der Manipulator (3) zur Bearbeitung der Werkstücke diese samt Palette (14) spannen, aus den Führungsschienen (13) entnehmen und nach der Bearbeitung wieder auf den Führungsschienen (13) absetzen kann, wobei die Paletten (14) den Führungsschienen (13) längsbeweglich und antreibbar zugeordnet und zum losen Einlegen der Werkstücke vorgesehen sind.

2. Vorrichtung nach Anspruch 1, **dadurch gekennzeichnet,** daß die Führungsschienen (13) eine in einer horizontalen Ebene verlaufende Fahrbahn bilden, die auf der Außenseite um den Manipulator (3) herumgeführt und im Bereich des Arbeitsraums (4) des Manipulators (3) unterbrochen ist, wobei der Manipulator (3) über den gesamten Bereich der Unterbrechung der Fahrbahn bewegt werden kann, daß weiterhin jede Palette (14) zwischen den beiden Führungsschienen (13) längsbeweglich angeordnet und zu ihrem Transport ein Palettenantrieb vorgesehen ist, daß an der Fahrbahn im den Arbeitsraum (4) begrenzenden Bereich zum einen eine Übernahmestation (15) und zum anderen eine Abgabestation (16) vorgesehen ist, daß jede Palette (14) mit einer Werkstückaufnahme (31), in die ein Gußstück (29) lose eingelegt wird, und Mitteln (23, 24 , 25, 30, 32) zur Halterung und Zentrierung versehen ist, derart daß der Manipulator (3) eine an die Übernahmestation (15) transportierte Palette (14) zusammen mit dem Gußstück (29) und unter Benutzung der Mittel (23, 24, 25, 30, 32) in der Transportebene selbsttätig zentrisch spannen, aus der Übernahmestation (15) entnehmen, zur Bearbeitung in den Arbeitsraum (4) bringen und nach der Bearbeitung an der Abgabestation (16) wieder auf die Führungsschienen (13) aufsetzen kann.

3. Vorrichtung nach Anspruch 2,
   **dadurch gekennzeichnet,**
   daß eine Palette (14) aus

   a) einem flachen, runden Palettengrundkörper (21), der an seiner Unterseite mit einem Antriebsfortsatz (22) versehen ist,
   b) drei im Palettengrundkörper (21) befestigten Spannbolzen (23), die über den Umfang verteilt in den Palettengrundkörper (21) eingesetzt und auf der Unterseite der Palette (14) mit je einer konisch zulaufenden Vertiefung (25) in einem Spannansatz (24) versehen sind,
   c) auf der Unterseite des Palettengrundkörpers (21) zwischen dem Spannansatz (24) und dem Palettengrundkörper (21) je einer Nutrolle (26) die auf einem Spannbolzen (23) drehbar gelagert ist,
   d) und einer auf der Oberseite des Palettengrundkörpers (21) auf die drei Spannbolzen (23) aufgesteckten Werkstückaufnahme (31) besteht,

   wobei zwei Spannbolzen (23) symmetrisch zu dem Durchmesser des Palettengrundkörpers (21) liegen auf dem der dritte angeordnet ist, derart daß die Palette (14) beim Einsetzen in die Fahrbahn einerseits von zwei und andererseits von einer Nutrolle (26) in den Führungsschienen (13) geführt wird und daß die Seite mit zwei Nutrollen (26) an der inneren Führungsschiene (13) der Fahrbahn anliegt.

4. Vorrichtung nach Anspruch 2 und 3,
   **dadurch gekennzeichnet,**
   daß die Führungsschienen (13) kreisförmigen Querschnitt und die Nutrollen (26) am Umfang eine Nut (28) mit prismatischem Querschnitt haben, wobei die Nutrollen (26) bei eingesetzter Palette (14) die Führungsschienen (13) umgreifen.

5. Vorrichtung nach Anspruch 2 bis 4,
   **dadurch gekennzeichnet,**
   daß der Palettenantrieb als umlaufende Rollenkette (19) mit einen Reibbelag (20) tragenden Treibelementen ausgebildet ist, wobei die Rollenkette (19) unterhalb der Fahrbahn so angeordnet ist, daß der Reibbelag (20) die Antriebsfortsätze (22) der Paletten (14) berührt und bei Bewegung der Rollenkette (19) die Paletten (14) mitnimmt.

6. Vorrichtung nach Anspruch 5,
   **dadurch gekennzeichnet,**
   daß der Reibbelag (20) als Beschichtung aus Gummi oder Kunststoff vorgesehen ist.

7. Vorrichtung nach Anspruch 2 bis 4,
   **dadurch gekennzeichnet,**
   daß der Palettenantrieb aus mehreren geraden Strecken besteht, deren Wirkbereiche sich in Kurven nahezu überschneiden und die bis in den Bereich der Übernahmestation (15) bzw. der Abgabestation (17) geführt sind.

8. Vorrichtung nach Anspruch 2 und 3,
   **dadurch gekennzeichnet,**
   daß die Werkstückaufnahme (31) als oben offenes Element ausgebildet ist, das an seiner Oberseite mit Führungsprofilen für das Werkstück und an seiner Unterseite mit Führungsbohrungen (32) entsprechend den Spannbolzen (23) am Palettengrundkörper (21) versehen ist.

9. Vorrichtung nach Anspruch 8,
   **dadurch gekennzeichnet,**
   daß die Werkstückaufnahme (31) als Führungsprofil in einer Schale (33) den Negativabguß eines zu bearbeitenden Werkstücks trägt.

10. Vorrichtung nach Anspruch 2,
    **dadurch gekennzeichnet,**
    daß als Übernahmestation (15) ein gegenüber der Fahrbahn verschieblich angeordnetes Schienenelement (16) vorgesehen ist, daß das Schienenelement (16) mit einem Verschiebeantrieb versehen und zur Aufnahme nur einer Palette (14) ausgebildet ist, so daß eine auf dem Schienenelement (16) befindliche Palette (14) mit Hilfe des Verschiebeantriebs in den Arbeitsraum (4) eingeschoben werden kann.

**Claims**

1. Casting cleaning grinding machine with a workpiece store and with a handler for fixing workpieces, for moving the workpieces into a working space and for rotating the workpieces about an axis, wherein the handler bridges an interruption of the workpiece store in the region of the working space, characterised in that the workpiece store (12) has guide rails (13) on which pallets (14) can be displaced, that the handler (3) for machining the workpieces fixes these together with pallets (14), removes them from guide rails (13) and, after machining, can deposit them again on to the guide rails (13), wherein the pallets (14) are arranged on the guide rails (13) longitudinally movable and drivable and are provided for loose laying on of the workpieces.

2. Device according to Claim 1, characterised in that the guide rails (13) form a railway running in a horizontal plane which runs round on the outer side around the handler (3) and is interrupted in the region of the working space (4) of the handler (3), wherein the handler (3) can be moved over the entire region of the interruption of the railway, that, furthermore, each pallet (14) is arranged longitudinally movably between both of the guide rails (13) and, for their transport, a pallet drive is provided, that, on the railway in the region bordering the working space (4), on the one hand a transfer station (15) and on the other a deposition station (16) is provided, that each pallet (14) is provided with a workpiece receiver (31) in which a casting (29) is loosely laid and means (23, 24, 25, 30, 32) for holding and centering, in such a fashion that the handler (3) automatically centrally fixes a pallet (14) transported to the transfer station (15) together with the casting (29) and using the means (23, 24, 25, 30, 32) in the transport plane, can remove it from the transfer station (15), bring it for machining into the workspace (4) and, after machining, deposit it at the deposition station (16) again on to the guide rails (13).

3. Device according to Claim 2, characterised in that a pallet (14) consists of
   a) a flat circular pallet base body (21) which is provided on its underside with a drive projection (22),
   b) three fixing bolts (23) fixed in the pallet base body (21) which are set distributed about the periphery in the pallet base body (21) and are provided on the underside of the pallet (14) in each case with a conically inwardly tapering depression (25) in a fixing head (24),
   c) on the underside of the pallet base body (21) between the fixing head (24) and the pallet base body (21), in each case a grooved roller (26) which is rotationally mounted on a fixing bolt (23),
   d) and a workpiece receiver set on the upper side of the pallet base body (21) on the three fixing bolts (23),
wherein two fixing bolts (23) lie symmetrically relative to the diameter of the pallet base body (21) on which the third is arranged in such a fashion that the pallet (14), on being put into the railway, is guided on the one hand by two and on the other hand by one grooved roller (26) in the guide rails (13) and that the side with two grooved rollers (26) lies adjacent the inner guide rail (13) of the railway.

4. Device according to Claim 2 and 3, characterised in that the guide rails (13) have a circular cross section and the grooved rollers (26) have a groove (28) at their periphery of prismatic cross section, whereby the grooved rollers (26), with the pallet (14) inserted, surround the guide rails (13).

5. Device according to Claim 2 to 4, characterised in that the pallet drive is constructed as a circulating roller chain (19) with drive elements bearing a friction covering (20), wherein the roller chain (19) is so arranged below the railway that the friction covering (20) contacts the drive projections (22) and the pallets (14) and, on movement of the roller chain (19), entrains the pallets (14).

6. Device according to Claim 5, characterised in that the friction covering (20) is provided as a coating of rubber or plastics.

7. Device according to Claim 2 to 4, characterised in that the pallet drive consists of several straight stretches, the regions of action of which substantially intersect at curves and which are guided up to as far as the region of the transfer station (15) or the deposition station (17).

8. Device according to Claim 2 and 3, characterised in that the workpiece receiver (31) is constructed as an upwardly open element which, at its upper side, is provided with guide shaping for the workpiece and, at its lower side, with guide bores (32) corresponding to the fixing bolts (23) on the pallet base body (21).

9. Device according to Claim 8, characterised in that the workpiece receiver (31) carries as a guide shaping in a shell (33) the negative casting of a workpiece to be machined.

10. Device according to Claim 2, characterised in that, as transfer station (15), there is provided a rail element (16) arranged displaceably with respect to the railway, that the rail element (16) is provided with a displacement drive and is constructed for the receipt of only one pallet (14), so that a pallet (14) located on the rail element (16) can be shifted with the aid of the displacement drive into the working space (4).

**Revendications**

1. Ebarbeuse à meule pour pièces de fonderie, comportant un magasin de pièces et un manipulateur pour serrer les pièces, déplacer les pièces dans un espace de travail et faire tourner les pièces autour d'un axe, le manipulateur permettant de combler une interruption du magasin de pièces dans la zone de l'espace de travail, caractérisée en ce que le magasin de pièces (12) comporte des rails de guidage (13) sur lesquels peuvent circuler des palettes (14), et en ce que le manipulateur (3) peut, en vue de l'usinage des pièces, serrer celles-ci avec la palette (14), les prélever des rails de guidage (13) et à nouveau les déposer sur les rails de guidage (13) après l'usinage, les palettes (14) étant associées aux rails de guidage (13) de manière à être mobiles en direction longitudinale et à pouvoir être entraînées, et les palettes étant également conçues pour la dépose libre des pièces.

2. Dispositif selon la revendication 1, caractérisé en ce que les rails de guidage (13) forment une voie de circulation qui s'étend dans un plan horizontal, qui passe autour du manipulateur (3) sur le côté extérieur, et qui est interrompue dans la zone de l'espace de travail (4) du manipulateur (3), celui-ci pouvant être déplacé sur la totalité de la zone d'interruption de la voie de circulation, en ce que par ailleurs, chaque palette (14) est disposée entre les rails de guidage (13) de manière a être mobile en direction longitudinale, un dispositif d'entraînement de palette étant prévu pour son transport, en ce que sur la voie de circulation, dans la zone délimitant l'espace de travail (4), sont prévus, d'une part un poste de réception (15) et d'autre part un poste d'évacuation (17), et en ce que chaque palette (14) est pourvue d'un porte-pièce (31) dans lequel est déposée librement une pièce de fonderie (29), ainsi que de moyens (23, 24, 25, 30, 32) pour le maintien et le centrage, de manière à ce que le manipulateur (3) puisse serrer une palette (14) avec la pièce de fonderie (29), ayant été transportée jusqu'au poste de réception (15), le centrage s'effectuant automatiquement dans le plan de transport grâce aux moyens (23, 24, 25, 30, 32), que le manipulateur puisse prélever la palette du poste de réception (15), l'amener dans l'espace de travail (4) en vue de l'usinage, et à nouveau la déposer sur les rails de guidage (13), au niveau du poste d'évacuation (17), après la fin de l'usinage.

3. Dispositif selon la revendication 2, caractérisé en ce qu'une palette (14) est constituée
   a) d'un corps de base de palette (21) plat et de forme ronde, qui est muni sur sa face inférieure, d'une protubérance d'entraînement (22),
   b) de trois broches de serrage (23) fixées dans le corps de base de palette (21), qui sont montées dans le corps de base de palette (21) en étant réparties sur sa périphérie, et qui sont chacune pourvues sur le côté inférieur de la palette (14), d'un évidement de forme conique (25) réalisé dans une embase de serrage (24),
   c) d'un galet rainuré (26) monté tournant sur chacune des broches de serrage (23), sur le côté inférieur du corps de base de palette (21), entre l'embase de serrage (24 et le corps de base de palette (21),
   d) et d'un porte-pièce (31) engagé sur les trois broches de serrage (23) sur la face supérieure du corps de base de palette (21),

   deux des broches de serrage (23) étant disposées symétriquement par rapport au diamètre du corps de base de palette (21), sur lequel est disposée la troisième broche de serrage, de telle sorte que la palette (14), lorsqu'elle est insérée dans la voie de circulation, est guidée sur les rails de guidage (13), d'un côté par deux et de l'autre côté par un galet rainuré (26), et de telle sorte que le côté comportant deux galets rainurés (26) s'applique contre le rail de guidage (13) situé à l'intérieur de la voie de circulation.

4. Dispositif selon les revendications 2 et 3, caractérisé en ce que les rails de guidage (13) présentent une section droite de forme circulaire, et les galets rainurés (26) présentent sur leur périphérie, une rainure (28) de section droite prismatique, les galets rainurés (26) s'engageant autour les rails de guidage (13) lorsque la palette (14) est mise en place.

5. Dispositif selon les revendications 2 à 4, caractérisé en ce que le dispositif d'entraînement de palette est réalisé sous la forme d'une chaine à galets (19) comportant des éléments entraîneurs portant un revêtement de friction (20), la chaîne à galets (19) étant disposée en-dessous de la voie de circulation de manière à ce que le revêtement de friction (20) soit en contact avec les protubérances d'entraînement (22) des palettes (14) en entraînant les palettes (14) lors du mouvement de la chaîne à galets (19).

6. Dispositif selon la revendication 5, caractérisé en ce que le revêtement de friction (20) est prévu sous la forme d'une couche de caoutchouc ou de matière plastique.

7. Dispositif selon les revendications 2 à 4, caractérisé en ce que le dispositif d'entraînement de palette est constitué de plusieurs trajets rectilignes dont les zones d'action se chevauchent pratiquement dans les courbes, et qui s'étendent en étant guidés, jusque dans la zone du poste de réception (15) et du poste d'évacuation (17).

8. Dispositif selon les revendications 2 et 3, caractérisé en ce que le porte-pièce (31) se présente sous la forme d'un élément ouvert sur le haut, pourvu sur son côté supérieur de profilés de guidage pour la pièce, et sur son côté inférieur, d'alésages de guidage (32) en correspondance avec les broches de serrage (23) sur le corps de base de palette (21).

9. Dispositif selon la revendication 8, caractérisé en ce que le porte-pièce (31) est pourvu dans une coque (33), de l'empreinte de coulée négative de la pièce à usiner.

10. Dispositif selon la revendication 2, caractérisé en ce que le poste de réception (15) se présente sous la forme d'un élément à rails (16) susceptible de coulisser par rapport à la voie de circulation, et en ce que l'élément à rails (16) est pourvu d'un dispositif d'entraînement de déplacement et est prévu pour recevoir une seule palette (14), de sorte qu'une palette (14) se trouvant sur l'élément à rails (16) peut être introduit dans l'espace de travail (4) à l'aide du dispositif d'entraînement de déplacement.

FIG. 1

FIG. 2

EP 0 231 827 B1

EP 0 231 827 B1

FIG. 3

FIG. 4

12

FIG. 5